# EUROPEAN PATENT APPLICATION

(11) **EP 2 380 430 A1**
(43) Date of publication of application: **26.10.2011**
(21) Application number: 11163572.8
(22) Date of filing: 22.04.2011
(51) Int. Cl.: A01G 9/10, A47F 7/00

(54) **Load-bearing fretted structure for supporting flowerpots or similar**

(30) Priority: 23.04.2010 IT VR20100014 U
(71) Applicant: Betafence Italia Spa, 64018 Tortoreto (TE) (IT)
(72) Inventor: Marconi, Domenico, 64018, Tortoreto (TE) (IT); Acciarri, Franco, 64018, Tortoreto (TE) (IT); Bori, Andrea, 64018, Tortoreto (TE) (IT); Laudadio, Antonio, 64018, Tortoreto (TE) (IT)
(74) Representative: Sandri, Sandro

(57) **Abstract**

A load-bearing structure (10) designed to support flowerpots or similar, consisting of an electrowelded metal grid substantially made from a plurality of longitudinal (11) and transverse elements (12) which cross each other at 90°, in which the transverse elements (12) are provided at regular intervals with different or "fretted" folds (13) with a substantially vertical development and which form vertical support elements representing the load-bearing structure in various configurations.

## Description

### TECHNICAL FIELD

This invention concerns a load-bearing fretted structure for supporting flowerpots or similar.

More specifically, this invention refers to a load-bearing fretted structure for supporting flowerpots or similar with multiple positions, substantially consisting of an electrowelded metal grid, modelled by appropriately designed folding to form fretting.

According to the invention, the structure supporting a defined number of flowerpots of different heights and diameters comprises an electrowelded metal grid with rectangular or square mesh, depending on the type of flowerpots to be inserted and the distance between them.

The structure according to the invention has the advantage with respect to the prior art of being constructed in a single piece with the ground supports which are formed by two horizontal bars folded at appropriate points.

This invention can be applied in the gardening sector, in greenhouses, nurseries and in particular in the flowerpot-holder sector.

### BACKGROUND ART

It is known that in the gardening sector, and particularly in garden centres or plant distribution centres, but also in the hobby and DIY sector, there is awareness of the need for multiple containers which make it possible to gather a plurality of flowerpots for display on appropriate shelves or more simply on the ground.

In addition to the types of plastic flowerpot holders, which are somewhat unattractive, higher quality flowerpot holders are currently made, according to known techniques, from metal grids with a plurality of intersecting metal wires or rods in order to create a horizontal grid structure with a flowerpot positioned in each square.

The current flowerpot support system is made from an electrowelded grid, and to keep this grid raised above the ground and create housings for the flowerpots the grid is supported by plastic elements or brackets which must be fixed to the grid.

This metal grid structure must, in fact, remain raised with respect to the ground so that the flowerpots are inserted in housings which hold them, allowing the upper edge of the flowerpot to be hung on or at least restrained by the grid which surrounds it.

The current flowerpot holder systems present the limitation that in order to obtain a load-bearing effect of the grid in the raised position with respect to the ground, a double combination of two parts is necessary: the grid and the supports, which must be assembled together with considerable difficulty during installation of the system and in addition are not able to ensure the stability of the resulting system.

### DESCRIPTION OF THE INVENTION

This invention proposes to provide a load-bearing fretted structure for supporting flowerpots or similar, able to eliminate or at least reduce the problems described above.

The invention also proposes to provide a load-bearing fretted structure for supporting flowerpots or similar which is simple to construct so that it can be produced at a limited cost even on a large scale.

This is achieved by means of a load-bearing fretted structure for supporting flowerpots or similar, the characteristics of which are described in the main claim.

The dependent claims of the solution in question describe advantageous embodiments of the invention.

The main advantages of this solution, in addition to those deriving from the construction simplicity, concern first of all the fact that the load-bearing fretted structure for supporting flowerpots or similar according to the invention is the self-supporting type and does not need any additional accessory for its use.

This load-bearing structure for supporting flowerpots or similar consists of an electrowelded metal grid made from iron wire coated with hot galvanizing, pre-galvanizing, electrolytic galvanising, triple galvanizing or stainless steel.

The electrowelded grid made from iron can be subsequently galvanised in one of the ways described above, and can be coated with PVC or polyester in different colours.

### DESCRIPTION OF THE DRAWINGS

Other features and advantages of the invention will become clear on reading the description given below of one embodiment of the invention, provided as a non-binding example, with the help of the accompanying drawings, in which:
- figure 1 shows a schematic front view of the flowerpot holder according to the invention, in which a number of flowerpots are inserted;
- figure 2 is a schematic front view of the flowerpot holder in general;

- figure 3 is a detailed view of one of the supports according to the invention made by vertical folding, or fretting, of the horizontal elements;
- figure 4 is a schematic front view of the flowerpot holder in general, with some flowerpots inserted;

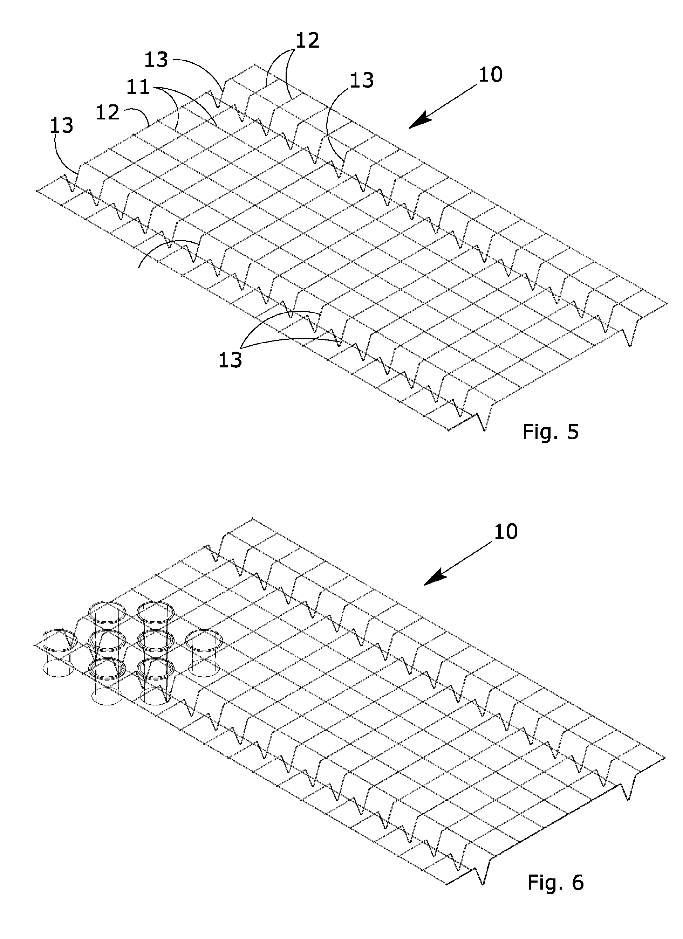

- figure 5 shows a schematic and prospective view of the flowerpot holder according to the invention with "V" shaped fretting, with all the structural elements schematized;
- figure 6 a schematic and prospective view of the flowerpot holder according to the invention with "V" shaped fretting, with all the structural elements schematized and partially filled with flowerpots;
- figures 7 and 8 are schematic views of the flowerpot holder with "U" shaped fretting.

### DESCRIPTION OF ONE EMBODIMENT OF THE INVENTION

With reference to the accompanying drawings, the reference number 10 indicates the load-bearing fretted structure for supporting flowerpots or similar, which substantially consists of an electrowelded metal grid made from iron wire coated with hot galvanizing, pre-galvanizing, electrolytic galvanising or triple galvanizing (e.g. type 3x Zn), ZincAlu (alloy consisting of zinc and aluminium), and stainless steel.

The grid is the electrowelded type, made from iron and subsequently galvanised in one of the ways described above, and can be coated with PVC or polyester in different colours.

The structure according to the invention is designed to be load-bearing, that is it must remain raised from the ground so that the flowerpots can be inserted in housings which hold them, allowing the upper edge of the flowerpot to be hung on or at least restrained by the grid which surrounds it.

One feature of the invention is thus the fact that the structure 10 consists of a plurality of longitudinal 11 and transverse elements 12 which cross each other at 90° and that these transverse elements 12 are provided at regular intervals with different or "fretted" folds 13 with a substantially vertical development and which form vertical support elements representing the load-bearing structure in various configurations.

The support 10 according to the invention, made from metal material with electrowelded wire, therefore presents folds 13 arranged vertically to form frets, and the folds can differ in shape, such as "V" or "U" shapes or similar, to allow the structure to be load-bearing.

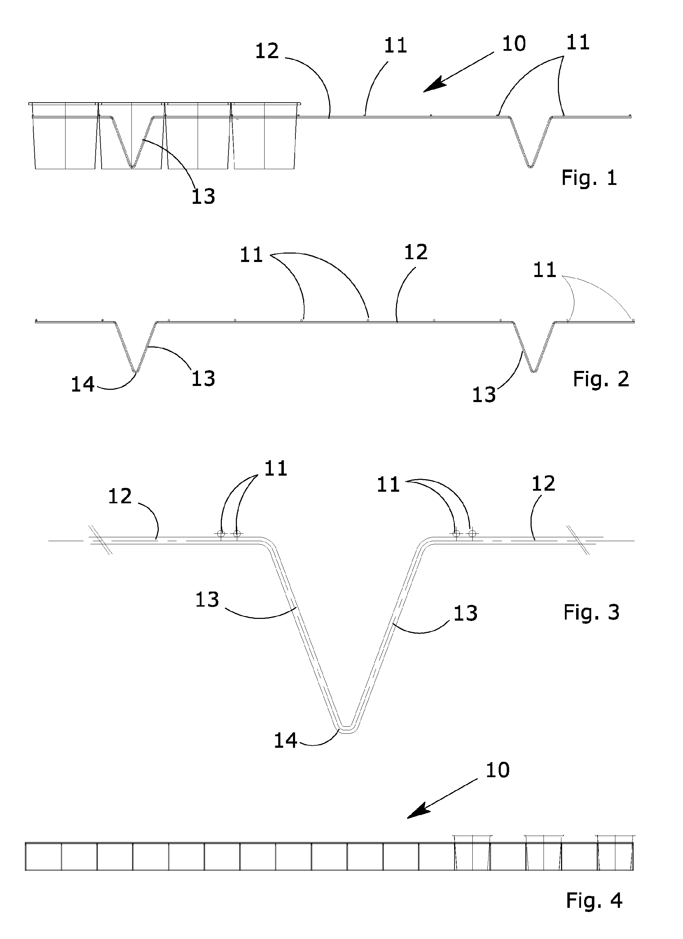

Figure 3 shows "V" shaped fretting, with two sloping sections that join at their lower end 14, representing the point at which the structure rests on the support surface.

The fold elements 13 are preferably but not exclusively two for each transverse and are formed by mechanical folding of the metal wire preferably by means of automatic press-forming processes.

The mesh of the electrowelded grid presents rectangular or square holes to accommodate the flowerpots over the entire surface of the grid or alternating configurations, according to specific requirements.

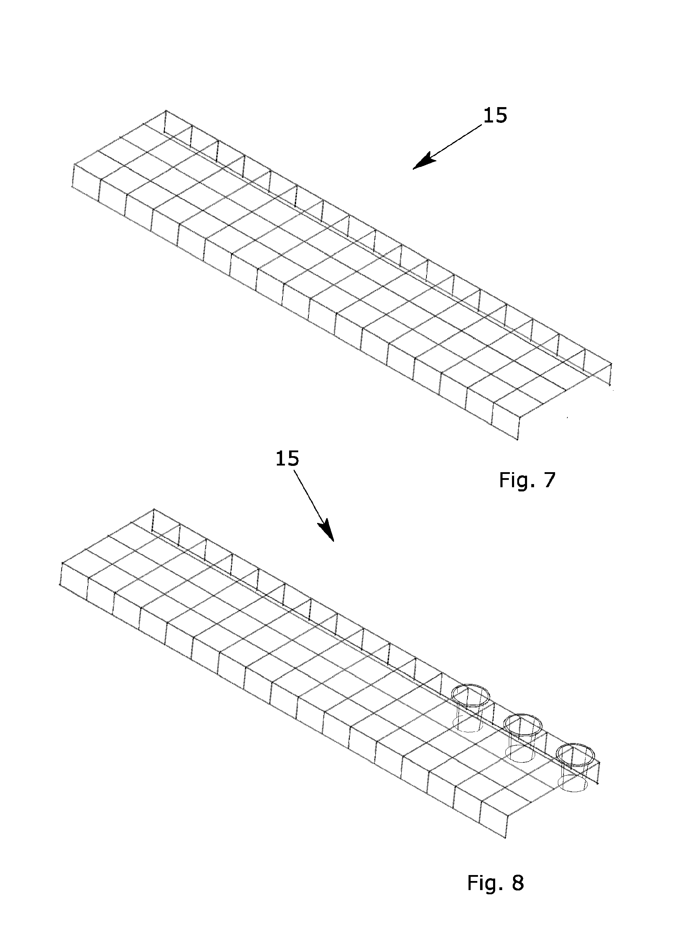

As can be seen in figures 7 and 8 the flowerpot holder can have "U" shaped folds, with the two outer edges folded downwards.

The galvanised metal support can be subsequently coated in PVC or polyester material or similar.

This structure can be advantageously used to support flowerpots or similar and, according to the defined configuration, allows easy maintenance and care of the flowerpots.

The invention is described above according to a preferred embodiment. It is nevertheless clear that the invention is susceptible to numerous variations which lie within the scope of its disclosure, within the framework of technical equivalents.

## Claims

1. A load-bearing structure (10) designed to support flowerpots or similar, consisting of an electrowelded metal grid substantially made from a plurality of longitudinal (11) and transverse elements (12) which cross each other at 90°, **characterised in that** the transverse elements (12) are provided at regular intervals with different or "fretted" folds (13) with a substantially vertical development and which form vertical support elements representing the load-bearing structure in various configurations.

2. A load-bearing structure (10) designed to support flowerpots or similar according to the foregoing claim, **characterised in that** it is made from iron wire treated with hot galvanizing, pre-galvanizing, electrolytic galvanising or triple galvanizing (e.g. type 3x Zn), ZincAlu (alloy consisting of zinc and aluminium), and stainless steel.

3. A load-bearing structure (10) designed to support flowerpots or similar according to either of the foregoing claims, **characterised in that** it presents fold elements (13) vertically developed to form a fret, and **in that** the fold can differ in shape, such as "V" or "U" shapes or similar, to allow the structure to be load-bearing.

4. A load-bearing structure (10) designed to support flowerpots or similar according to any of the foregoing claims, **characterised in that** the "V" shaped fret (13) presents two sloping sections that join at their lower end (14), representing the point at which the structure rests on the support surface.

5. A load-bearing structure (10) designed to support flowerpots or similar according to any of the foregoing claims, **characterised in that** the fold elements (13) are preferably but not exclusively formed by mechanical folding of the metal wire by means of automatic press-forming processes.

6. A load-bearing structure (10) designed to support flowerpots or similar according to any of the foregoing claims, **characterised in that** the mesh of the electrowelded grid presents rectangular or square holes to accommodate the flowerpots over the entire surface of the grid or alternating configurations, according to specific requirements

7. A load-bearing structure (10) designed to support flowerpots or similar according to any of the foregoing claims, **characterised in that** the galvanised metal support can be subsequently coated in PVC or polyester material or similar.
